# EUROPEAN PATENT APPLICATION

(11) **EP 4 258 290 A1**
(43) Date of publication of application: **11.10.2023**
(21) Application number: 21855656.1
(22) Date of filing: 29.09.2021
(51) Int. Cl.: G21F 5/06, G21F 5/12

(54) **TRANSPORTATION CONTAINER FOR NUCLEAR POWER STATION SPENT FUEL STORAGE TANK**

(30) Priority: 13.11.2020 CN 202011267034
(71) Applicant: China Nuclear Power Engineering Co., Ltd., Shenzhen, Guangdong 518124 (CN); China Nuclear Power Design Company Ltd. (Shenzhen), Shenzhen, Guangdong 518100 (CN); China General Nuclear Power Corporation, Shenzhen, Guangdong 518026 (CN); CGN Power Co., Ltd., Shenzhen, Guangdong 518026 (CN)
(72) Inventor: CHENG, Cheng, Shenzhen, Guangdong 518124 (CN); PAN, Yue long, Shenzhen, Guangdong 518124 (CN); TANG, Shao hua, Shenzhen, Guangdong 518124 (CN); ZHANG, Xue ling, Shenzhen, Guangdong 518124 (CN)
(74) Representative: Greaves Brewster LLP
(86) International application number: PCT/CN2021/121646
(87) International publication number: WO 2022/033606

(57) **Abstract**

The present invention provides a transportation container for a nuclear power station spent fuel storage tank including: a container body, including an inner cylinder body and an outer cylinder body sheathed outside the inner cylinder body, the inner cylinder body being provided with a guide rail; a top cover, mounted at the top of the container body by an upper flange; and a penetrating cover plate, detachably mounted at the bottom of the container body by a lower flange. An upper buffer plate is arranged between the top cover and a spent fuel storage tank in the inner cylinder body, and a lower buffer plate is arranged between the penetrating cover plate and the spent fuel storage tank in the inner cylinder body. Compared with the prior art, the transportation container for a nuclear power station spent fuel storage tank of the present invention is suitable for bearing horizontal and vertical spent fuel storage tanks, and the spent fuel storage tanks can be directly stored in the transportation container and transported to a post-treatment plant or a geological treatment facility for a long distance, to achieve recycling and retreatment of spent fuel assemblies, such that the technical problem whereby spent fuel storage tanks are not able to be directly transported for a long distance domestically and abroad is effectively solved.

## Description

### FIELD OF THE INVENTION

The present invention generally relates to the technical field of nuclear power plants and, more particularly, relates to a transportation container for a nuclear power station spent fuel storage tank.

### BACKGROUND OF THE INVENTION

In the field of nuclear power technology, the spent fuel pool for nuclear power plants has a relatively limited capacity. The spent fuel generated from the nuclear power plant reactors is cooled in the spent fuel pool for 8 to 10 years, therefore the spent fuel needs to be prepared to be loaded into transportation containers within the nuclear power plant, and be transported to the reprocessing plant by long-distance transportation outside the plant for retrieval, or be transported to geological storage for geological disposal.

However, the reprocessing plant and the geological storage both have the problems of complex technology, high construction cost and long project cycle. Therefore, many countries in the world are considering the construction of dry-process concrete spent fuel storage facilities as a temporary interim storage means, to provide a buffer against inadequate reprocessing or geological disposal capacity.

At present, the dry storage technology of concrete spent fuel can be divided into horizontal storage and vertical storage, its core equipment consists of two independent sub-equipments: one is a single thin-walled metal spent fuel tank with a thin housing inside which the spent fuel is loaded, the other is the concrete silo which is placed on the outside of the fuel tank to provide structure and shield protection. An air passage is formed between the two sub-equipments. The decay heat is passively conducted via natural ventilation. The spent fuel storage tank is a welded and sealed cylindrical thin-walled metal container, in which a fuel basket is loaded, and a spent fuel assembly is loaded in the fuel basket. The spent fuel storage tank is filled with helium gas, and the spent fuel assembly is protected from material corrosion and degradation in an inert environment.

While spent fuel dry storage equipment alleviates the insufficient capacity in reprocessing plant and geological disposal for a certain period of time, after several years of interim storage, there is still an eventual need to transport the metal tanks loaded with spent fuel assemblies to reprocessing plants and geological repositories for recovery and reprocessing. As previously stated, existing spent fuel transportation containers can only be used for direct shipment of the spent fuel assemblies, and the metal storage tanks welded with sealed spent fuel assemblies cannot be placed inside the transportation container for long-distance off-site transportation. Up to now, there is no mature technology which can transport spent fuel metal storage tank directly for a long distance at home and abroad. The in-plant temporary transfer containers used for dry storage of spent fuel in nuclear power plants are only used temporarily for a short period of time, and do not meet the safety requirements of accidents such as falling, burning, puncturing and sealing as required by IAEA regulations, it also cannot solve the problem of long-distance transportation outside the spent fuel storage tank plant.

In view of the foregoing, what is needed, therefore, is to provide a transportation container for a nuclear power station spent fuel storage tank which can achieve the direct long-distance off-plant transportation of existing horizontal, vertical spent fuel storage tanks.

### SUMMARY OF THE INVENTION

One object of the present invention is to provide a transportation container for a nuclear power station spent fuel storage tank, which can achieve the direct long-distance off-plant transportation of existing horizontal, vertical spent fuel storage tanks.

According to one embodiment of the present invention, a transportation container for a nuclear power station spent fuel storage tank comprises:
a container body comprising an inner cylinder body and an outer cylinder body sheathed outside the inner cylinder body, the inner cylinder body being provided with a guide rail;
a top cover, mounted at a top of the container body by an upper flange; and
a penetrating cover plate, detachably mounted at a bottom of the container body by a lower flange;
wherein an upper buffer plate is arranged between the top cover and a spent fuel storage tank in the inner cylinder body, and a lower buffer plate is arranged between the penetrating cover plate and the spent fuel storage tank in the inner cylinder body.

According to one aspect of the present invention, the upper flange is provided with a single step surface, a guide surface and a lead-filled interlayer, the top cover is located on the single step surface, and the top cover is assembled to the upper flange through bolts set in bolt holes in the top cover and bolt holes in the upper flange.

According to one aspect of the present invention, the top cover is provided with a seal leak inspection hole and two seal grooves each being formed with an O-shaped seal ring, the seal leak inspection hole is provided with a quick joint round groove, a quick joint vertical channel, a horizontal channel and a seal surface vertical channel, and the seal surface vertical channel is positioned between the two O-shaped seal rings.

According to one aspect of the present invention, the guide rail arranged on the inner cylinder body comprises a support guide rail and a thermal conduction guide rail arranged at intervals.

According to one aspect of the present invention, the inner cylinder body comprises an outer layer of cylinder body, an inner layer of cylinder body, and a middle lead layer filled between the outer layer of cylinder body and the inner layer of cylinder body.

According to one aspect of the present invention, the outer cylinder body comprises an outer housing, an upper and a lower ring plate, an upper shock absorber support ring, an upper support ring bolt hole, a lower shock absorber support ring, a lower support ring bolt hole and a neutron shielding layer, the upper shock absorber support ring, the lower shock absorber support ring and the neutron shielding layer are contained by the outer housing and the upper and the lower ring plate, the neutron shielding layer is seated between the upper shock absorber support ring and the lower shock absorber support ring.

According to one aspect of the present invention, the lower flange comprises a base, a through hole in a center of the base, a lead filling groove and a drain hole, an external through hole, an internal through hole, a step surface and a plurality of bolt holes are set around the through hole, the penetrating cover plate is seated on the step surface, bolts extend through the penetrating cover plate and the bolt holes to secure the penetrating cover plate to the lower flange via redundant fastening seal.

According to one aspect of the present invention, the penetrating cover plate is provided with a plurality of bolt grooves at a periphery thereof and two sealing grooves at a back side thereof, and each sealing groove is provided with an O-shaped seal ring therein.

According to one aspect of the present invention, the buffer plate comprises an upper panel, a lower panel, an external support ring, an internal support ring and a buffer sleeve, the upper panel, the lower panel, the external support ring and the internal support ring are welded into an integrated cylindrical ring, and the buffer sleeve is a semicircle circular pipe with a semicircle cross section, which is distributed uniformly in the cylindrical ring in a radiating concentric ring, the arc top and bottom of the buffer sleeve are in contact with the upper panel and the lower panel respectively.

According to one aspect of the present invention, the transportation container for a nuclear power station spent fuel storage tank further comprises an upper trunnion, the upper trunnion comprises an upper fixing base, an upper trunnion disc, an upper support trunnion, a hoisting trunnion, an upper protective baffle and an upper shock absorber fixing bolt hole, the upper fixing base is in close contact with the inner cylinder body, and the upper trunnion disc is nested in the upper fixing base and is fixedly connected with the upper fixing base via bolts.

According to one aspect of the present invention, the transportation container for a nuclear power station spent fuel storage tank further comprises a lower trunnion, the lower trunnion comprises a lower fixing base, a lower trunnion disc, a lower support trunnion, a lower protective baffle and a lower shock absorber bolt fixing hole, the lower fixing base is in close contact with the inner cylinder body, and the lower trunnion disc is nested in the lower fixing base and is fixedly connected with the lower fixing base via bolts.

### BRIEF DESCRIPTION OF THE DRAWINGS

In order to explain the technical solution of the embodiments of the present invention clearly, a brief introduction to the drawings required in the embodiments will be described as following. It should be understood that the drawings show only some embodiments of the present invention and, therefore, should not be seen as a limitation to the scope of the present invention. To one ordinary skilled in the art, other relevant drawings can also be obtained without creative work on the basis of the drawings.
Fig. 1 is a perspective view of a transportation container for a nuclear power station spent fuel storage tank for transportation of a vertical spent fuel storage tank according to one embodiment of the present invention;
Fig. 2 is a perspective view of a transportation container for a nuclear power station spent fuel storage tank for transportation of a horizontal spent fuel storage tank according to one embodiment of the present invention;
Fig. 3 is a partially cross sectional view of the transportation container for a nuclear power station spent fuel storage tank according to one embodiment of the present invention, wherein a spent fuel storage tank is carried;
Fig. 4 is a partially cross sectional view of the transportation container for a nuclear power station spent fuel storage tank according to one embodiment of the present invention, wherein a spent fuel storage tank has been removed;
Fig. 5 is a perspective view of a top cover of the transportation container for a nuclear power station spent fuel storage tank according to one embodiment of the present invention;
Fig. 6 is a partially enlarged view of the circle portion in Fig. 5;
Fig. 7 is a perspective view of an upper flange of the transportation container for a nuclear power station spent fuel storage tank according to one embodiment of the present invention;
Fig. 8 is a perspective view of an inner cylinder body of the transportation container for a nuclear power station spent fuel storage tank according to one embodiment of the present invention;
Fig. 9 is a perspective view of a guide rail on the inner wall of the inner cylinder body of the transportation container for a nuclear power station spent fuel storage tank according to one embodiment of the present invention;
Fig. 10 is a perspective view of an outer cylinder body of the transportation container for a nuclear power station spent fuel storage tank according to one embodiment of the present invention;
Fig. 11 is a perspective view of a lower flange of the transportation container for a nuclear power station spent fuel storage tank according to one embodiment of the present invention;
Fig. 12 is another perspective view of a lower flange of the transportation container for a nuclear power station spent fuel storage tank according to one embodiment of the present invention;
Fig. 13 is a perspective view of a penetrating cover plate of the transportation container for a nuclear power station spent fuel storage tank according to one embodiment of the present invention;
Fig. 14 is a perspective view of a buffer plate of the transportation container for a nuclear power station spent fuel storage tank according to one embodiment of the present invention;
Fig. 15 is another perspective view of the buffer plate of the transportation container for a nuclear power station spent fuel storage tank according to one embodiment of the present invention, wherein the upper panel has been removed;
Fig. 16 is a perspective view of an upper trunnion of the transportation container for a nuclear power station spent fuel storage tank according to one embodiment of the present invention;
Fig. 17 is a perspective view of a lower trunnion of the transportation container for a nuclear power station spent fuel storage tank according to one embodiment of the present invention.

### DETAILED DESCRIPTION OF THE INVENTION

The technical solution of the embodiments of the present invention will be described clearly and completely in view of the attached drawings, in which only part of not all embodiments of the present invention are shown. Based on the embodiments of the present invention as described, other embodiments obtained by one ordinary skilled in the art without creative work fall within the scope of the present invention.

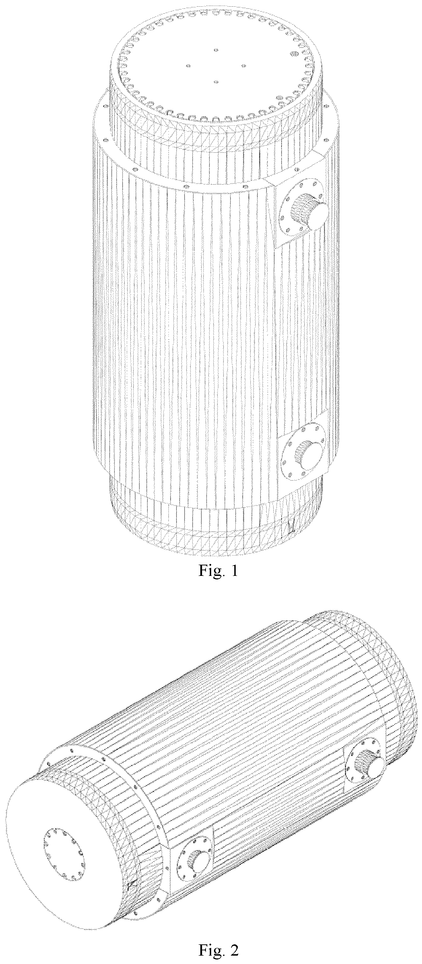

Referring to Figs. 1 to 17, the prevent invention provides a transportation container for a nuclear power station spent fuel storage tank, including:
a container body 1, including an inner cylinder body 13 and an outer cylinder body 14 sheathed outside the inner cylinder body 13, the inner cylinder body 13 being provided with a guide rail 18;
a top cover 11, mounted at the top of the container body 1 by means of an upper flange 12; and
a penetrating cover plate 19, detachably mounted at the bottom of the container body 1 by means of a lower flange 15;
wherein an upper buffer plate 2 is arranged between the top cover 11 and a spent fuel storage tank in the inner cylinder body 13, and a lower buffer plate 2 is arranged between the penetrating cover plate 19 and the spent fuel storage tank in the inner cylinder body 13.

The transportation container for a nuclear power station spent fuel storage tank of the present invention has a sealed cylindrical cylinder structure defining a cavity therein, including a container body 1, an upper buffer plate and a lower buffer plate 2 at the upper and lower ends of the inner cavity of the container body 1, the spent fuel storage tank is stored freely between the upper and the lower buffer plates 2, thereby providing with the structural protection function. The top cover 11 is a single-layer thick-wall cover plate provided with an O-shaped sealing ring 115. The top cover 11 is compressed and sealed by bolts. The container body 1 includes an inner cylinder body 13 and an outer cylinder body 14 sheathed outside the inner cylinder body 13. The inner cylinder body 13 is a double-layer stainless steel or carbon steel structure having a lead interlayer for shielding gamma rays. The outer cylinder body 14 is sheathed outside the inner cylinder 13, and covers a shock absorber support ring 143, 145, a boron-containing resin or a boron-containing polyethylene. The outer cylinder body 14 is provided with an upper trunnion 16 and a lower trunnion 17, which are used for hoisting and assembling the transportation container. The bottom of the transportation container for a nuclear power station spent fuel storage tank is provided with a penetrating cover plate 19 for pulling the horizontal spent fuel storage tank into the transportation container in a horizontal direction directly from the horizontal concrete module via a hydraulic rod, also suitable for lifting a vertical spent fuel storage tank from a vertical concrete silo into a transportation container in a vertical direction.

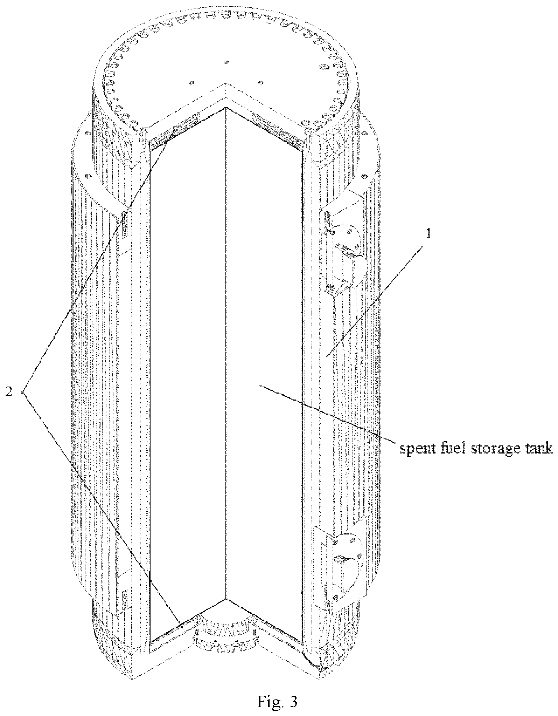

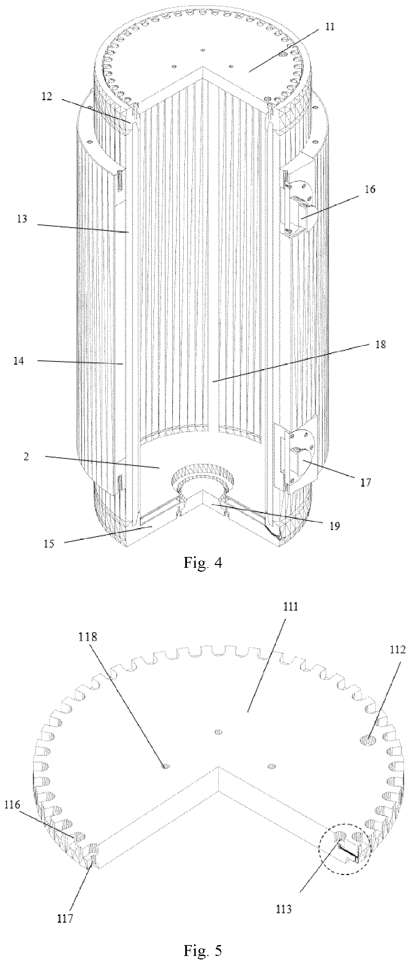

Referring to Figs. 3 and 4, the transportation container for spent fuel storage tank includes a top cover 11, an upper flange 12, an inner cylinder 13 body, an outer cylinder body 14, a lower flange 15, an upper trunnion 16, a lower trunnion 17, a support guide rail 18 and a penetrating cover plate 19.

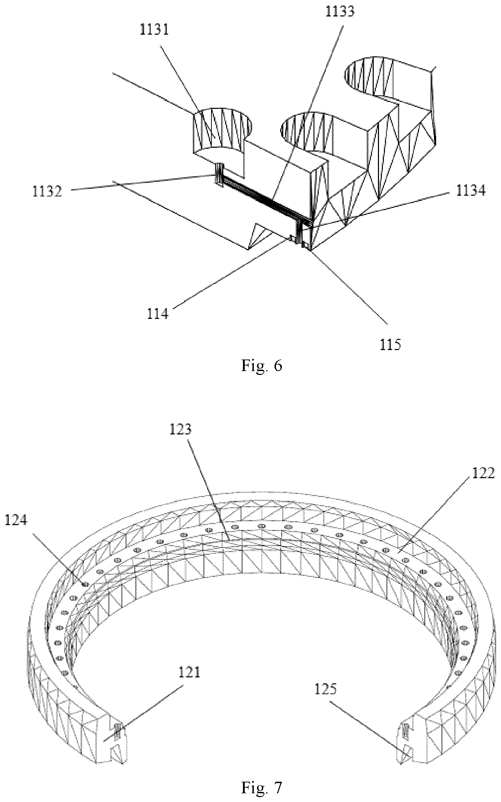

Referring to Figs. 5 and 6, the top cover 11 is an integral thick-wall circular metal cover plate, which is located on the step surface of the upper flange 12 and is fixed to the upper flange 12 via bolts, and achieved compression seal via the double O-shaped seal ring 115. The top cover 11 includes a main cover plate 111, a vent hole 112, a seal leak inspection hole 113, a seal groove 114, an O-shaped seal ring 115, a bolt groove 116 and a bolt hole 117. The main cover plate 111 is an integral forging thick-wall metal plate, and the vent hole 112 is a through hole for vacuum drying and filling helium gas in the container. The seal leak inspection hole 113 is used to test the seal integrity of O-shaped ring 115. Provided are two seal grooves 114, located at the outer periphery of the bottom of the main cover plate 111, each seal groove 114 being provided with an O-shaped seal ring 115, to achieve the double redundant seal of the top cover 11.

The seal leak inspection hole 113 is provided with a quick joint round groove 1131, a quick joint vertical hole 1132, a horizontal channel 1133 and a seal surface vertical channel 1134. The quick joint is located in the quick joint round groove 1131. The quick joint is inserted into the quick joint vertical hole 1132 and is threaded for gas detection sampling. The seal surface vertical channel 1134 is located between two O-shaped sealing rings 115, in order to detect in time whether the inner O-shaped sealing rings fail.

There are 24 bolt grooves 116, which are located in the periphery area of the main cover plate 111 and uniformly distributed in a concentric circle. Each bolt groove 116 penetrates the outer periphery of the main cover plate 111. A bolt hole 117 through the cover plate is arranged in each bolt groove 116. After the top cover 11 is installed on the single step surface 122 of the upper flange 122, the bolts are respectively inserted into the bolt hole 117 and the bolt holes 124 of the upper flange for symmetrical fastening, the double redundant seal is realized between the top cover 11 and the container cylinder. The top cover 11 is provided with a hoisting hole 118, which is used for hoisting, transporting and installing of the top cover 11.

Referring to Fig. 7, the upper flange 12 includes an integrated forged metal component 121 with a "h" shaped cross section, a single step surface 122, a guide surface 123, a bolt hole 124 and a lead-filled interlayer 125. The top cover 11 is seated on the single step surface 122 and is fixed and sealed by inserting a bolt into the bolt hole 124. The guide face 123 is an expansion surface with a horn cross section, which is used to realize the guide function in the process of hoisting the spent fuel storage tank into the transportation container, and avoid the stress concentration damage caused by the collision between the spent fuel storage tank and the step surface. The lead-filled interlayer 125 is an annular hollow groove arranged at the lower end of the upper flange 12. During the manufacture of the device, the hollow groove is located on the top of the inner cylinder body 13 and acts as a lead overflow layer between the double metal cylinders of the inner cylinder body 13 to ensure the compactness of the filled lead in the inner cylinder body 13.

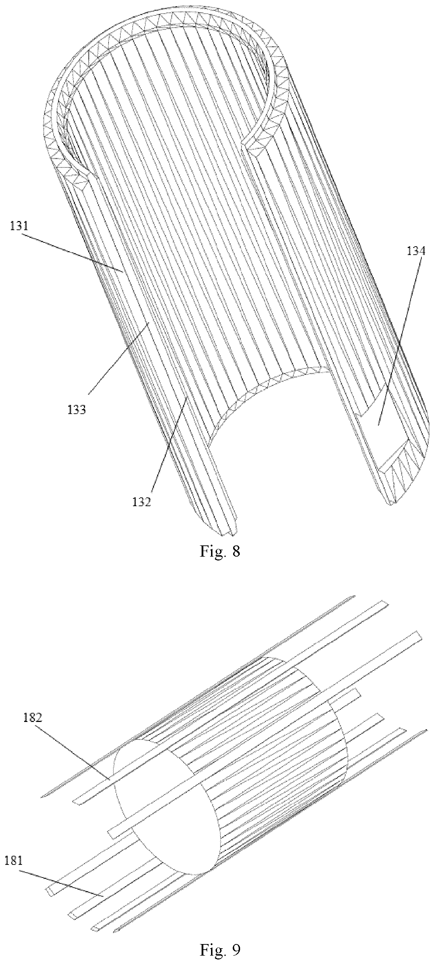

Referring to Fig. 8, the inner cylinder body 13 includes an outer layer of cylinder body 131, an inner layer of cylinder body 132, a middle lead layer 133 and a lower trunnion slot 134. The outer layer of cylinder body 131 and the inner layer of cylinder body 132 are both cylindrical, and the outer layer of cylinder 131 is a thick-wall metal cylinder, which can be formed by integrated forging or thick-wall annular steel plate tailor-welding. The inner layer of cylinder 132 is a relatively thin-walled metal cylinder, which can be composed of ring-shaped steel plate tailor-welded. After the lead is poured into and cooled in the chamber between the outer layer of cylinder 131 and the inner layer of cylinder 132, the lead is filled between the outer layer of cylinder 131 and the inner layer of cylinder 132, which has the function of γ-ray shielding. The lower trunnion clamp slot 134 is used for receiving the square base plate of the lower trunnion 17 and bears the structural strengthening function to the lower trunnion 17.

Referring to Fig. 9, the guide rail 18 is welded on the inner wall of the inner layer of cylinder body 132. The guide rail 18 includes a support guide rail 181 and a thermal conducting guide rail 182. There are four support rails 181, the angle between the support rails 181 and the center of the cylinder is ±12°and ±38°respectively. The base material of the support rails 181 is stainless steel, and the surface of the rails is plated with nickel which has good wear resistance. The support rails 181 have two functions: one is to support and stabilize the spent fuel storage tank when the spent fuel storage tank stored in the horizontal concrete module is pulled horizontally into the inner layer of cylinder body 132 of the transportation container, thereby preventing the spent fuel storage tank from shaking and acting as a cushion layer on the lower part of the tank to reduce the friction between the spent fuel storage tank and the inner layer of cylinder body 132. The other is, in the long-distance transportation outside the plant, the support rails 181 can be fixed to support the spent fuel storage tank to prevent shaking of the spent fuel storage tank during transportation.

There are three thermal conducting guide rails 182 located in the inner wall area opposite to the support guide rails 181. The thermal conducting guide rails 182 are made of aluminum material having good heat conducting properties. The angles between the thermal conducting guide rails 182 and the center of the cylinder are 0°and ±30° respectively. After thermal expansion of the spent fuel storage tank, the outer surface of the spent fuel storage tank contacts the aluminum thermal conducting guide rails 182, so as to strengthen the heat transfer ability between the spent fuel storage tank and the transport container, and to ensure the thermal safety of the spent fuel assembly.

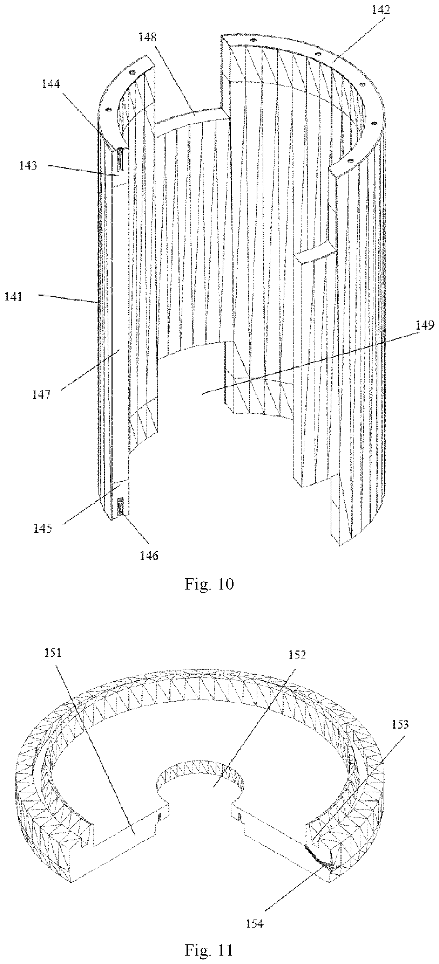

Referring to Fig. 10, the outer cylinder body 14 includes a housing 141, an upper and a lower ring plate 142, an upper shock absorber support ring 143, an upper support ring bolt hole 144, a lower shock absorber support ring 145, a lower support ring bolt hole 146, a neutron shielding layer 147, an upper trunnion clamp slot 148 and a lower trunnion clamp slot 149. The upper shock absorber support ring 143, the lower shock absorber support ring 145 and the neutron shielding layer 147 are contained by the outer housing 141 and the upper and a lower ring plate 142. The neutron shielding layer 147 is located between the upper shock absorber support ring 143 and the upper support ring bolt hole 144.

The upper shock absorber support ring 143 and the lower shock absorber support ring 145 are both integrated forged thick-wall metal rings, each defining the same number of bolt holes. After the spent fuel storage tank assembled to the transportation container, ring shock absorbers shall be provided at both ends of the transportation container. In order to secure the shock absorbers, bolts are inserted and extends through the upper support ring bolt holes 144 and the lower support ring bolt hole 146 in the upper and lower support rings 143, 145, to fix the transportation container to the shock absorbers at two ends thereof respectively.

The neutron shielding layer 147 is composed of neutron shielding material, whose function is to shield neutrons produced in production of spent fuel assembly. In the outer cylinder body 14, the neutron shielding material can be integrally cast and molded, and a number of neutron shielding modules can be used for splicing and assembling.

The upper trunnion clamp slot 148 is a square hollow slot arranged at upper portion of the outer cylinder body 14, for clipping and fixing the upper trunnion 16. The lower trunnion clamp slot 149 is also a square hollow slot arranged at lower portion of the outer cylinder body 14, for clipping and fixing the lower trunnion 17.

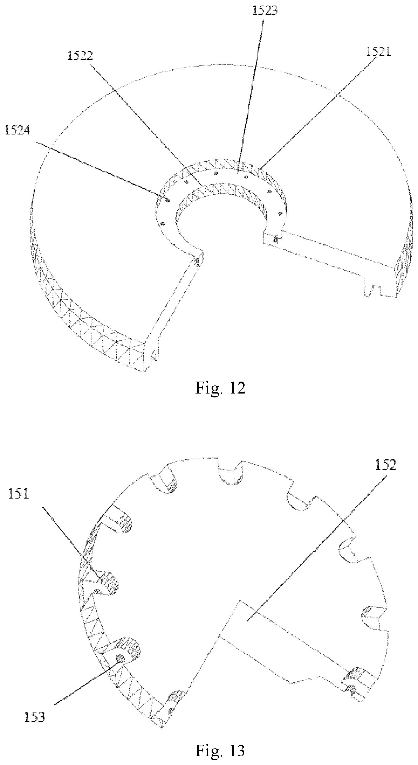

Referring to Figs. 11 and 12, the center area of the lower flange 15 under the transportation container is provided with a through hole 152 and a penetrating cover plate 19. A hydraulic cylinder can be used to extend through the through hole 152, so that the horizontal spent fuel storage tank can be pulled directly from the horizontal concrete module into the transportation container. A sling also can be used to extend through the through hole 152, so that a vertical spent fuel storage tank can be lifted from the vertical concrete silo in the vertical direction into the transportation container. When the spent fuel storage tank is retrieved, the penetrating cover plate 19 with double O-shaped seal ring 115 is installed, and the penetrating cover plate 19 is superfluously compressed and sealed by bolts.

The lower flange 15 includes a base 151, a through hole 152, a lead filling groove 153 and a drain hole 154. The base 151 is an integrally forged thick-walled round metal plate, and the through hole 152 is located in the central area of the base 151 and extends through the base 151. For a horizontal spent fuel storage tank, the hydraulic cylinder is passed through the through hole 152, and the horizontal spent fuel storage tank is pulled from the horizontal concrete module into the transportation container. In the case of a vertical spent fuel storage tank, a sling is passed through the through hole 152 and the vertical spent fuel storage tank is vertically lifted into the transportation container.

The drain hole 154 is a circular channel with an oblique I-shaped cross section, the inclined channel is communicated with the inner cavity of the transportation container, so as to facilitate the internal drainage of the transportation container. The horizontal hole extends through the lower flange 15 and is equipped with a quick joint. When a drain operation is performed, the drain pipe is connected to the quick joint, and the water in the annular cavity between the transportation container and the spent fuel storage tank can be emptied. In addition, the drain hole 154 may also perform a water filling operation by connecting the water filling line to the drain hole 154 and using a pump to fill the annular cavity between the spent fuel storage tank and the transportation container with desalted water.

The through hole 152 includes an external through hole 1521, an internal through hole 1522, a step surface 1523 and a bolt hole 1524. After the spent fuel storage tank enters the transportation container, the penetrating cover plate 19 is placed on the step surface 1523, and the penetrating cover plate 19 and the lower flange 15 are tightly sealed by bolts passing through the penetrating cover plate 19 and mounted in the bolt hole 1524.

Referring to Fig. 13, the penetrating cover plate 19 is a round thick-wall cover plate formed with an inclined step surface. The penetrating cover plate 19 defines a number of bolt grooves at an outer periphery thereof, with each bolt groove extending through the periphery of the penetrating cover plate 19. Two sealing grooves are arranged on a back surface of the penetrating cover plate 19, and each sealing groove is provided with an O-shape sealing ring. The back surface of the penetrating cover plate 19 is in close contact with the perforated step surface for redundant sealing of the lower flange 15. There are two sealing grooves in the outer periphery area of the penetrating cover plate 19, and an O-shape sealing ring is arranged in each sealing groove, so as to realize the double-layer redundant sealing of the penetrating cover plate 19.

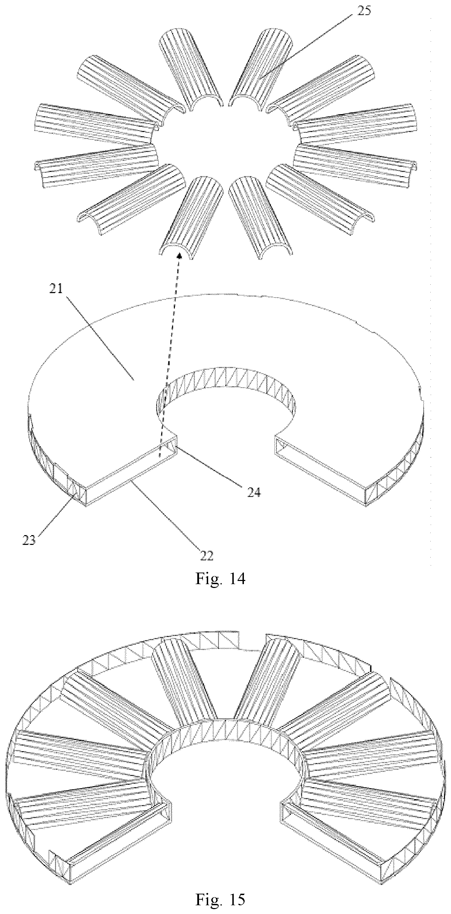

Referring to Figs. 14 and 15, the buffer plate 2 includes an upper panel 21, a lower panel 22, an external support ring 23, an internal support ring 24 and a buffer sleeve 25. The upper panel 21, the lower panel 22, the external support ring 23 and the internal support ring 24 are welded to form an integrated cylindrical ring. The buffer sleeve 25 is a semicircular tube with a semicircular cross section and is uniformly distributed in the cylindrical ring in a radiating concentric ring. The arc top and bottom of the buffer sleeve g 25 are in contact with the upper panel 21 and lower panel 22 respectively. The structural deformation of buffer sleeve 25 provides structural protection for spent fuel storage tank in case of a drop accident.

It should be noticed that, two buffer plates 2 are arranged in the transportation container of the spent fuel storage tank of the present invention, one is located at the lower part of the spent fuel storage tank, and the other is located at the upper part of the spent fuel storage tank,. The two buffer plates 2 are seated in a mirror relationship. When the spent fuel transportation container falls in a long distance transportation, if the upper end of the transportation container lands first, the upper buffer plate 2 can provide the buffer function to protect the spent fuel storage tank and the internal spent fuel assembly. If the lower end of the transportation container lands first, the spent fuel storage tank and the internal spent fuel assembly can be protected by the lower buffer plate 2 having a cushioning function.

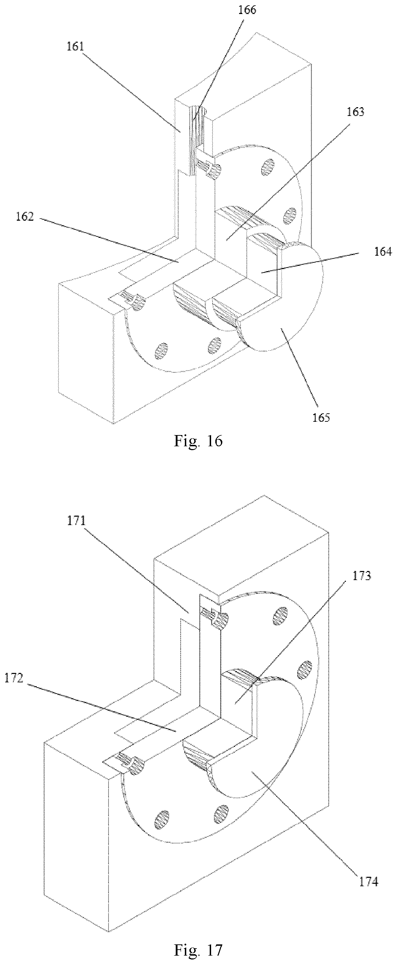

Referring to Fig. 16, the upper trunnion 16 includes an upper fixing base 161, an upper trunnion disc 162, an upper support trunnion 163, a lifting trunnion 164, a protective baffle 165, and an upper shock absorber fixing bolt hole 166. The upper fixing base 161 is an integral forging solid square metal plate, and is provided with an arc-shaped surface at a side near the inner cylinder body 13. The upper fixing base 161 is embedded in the upper trunnion clamp slot 148, and is closely connected with the inner cylinder boy 13 by welding. A step circular groove is arranged in the upper fixing base 161 for fixing the upper trunnion disc 162, and an upper shock absorber fixing bolt hole 166 is arranged on the top of the upper fixing base 161.

The upper trunnion disc 162 is nested in the upper fixing base 161 and is fixedly connected to the upper fixing base 161 by bolts. The upper support trunnion 163 and the hoisting trunnion 164 are both metal cylinders, wherein the upper support trunnion 163 is used for horizontally supporting the transportation container, the hoisting trunnion 164 is used for overturning and hoisting the transportation container, and the protective baffle 165 is used to prevent the spreader from slipping out during lifting.

Referring to Fig. 17, the lower trunnion 17 includes a lower fixing base 171, a lower trunnion disc 172, a lower support trunnion 173, a protective baffle 174 and a lower shock absorber bolt fixing hole 175. The lower fixing base 161 is an integral forging solid square metal plate defining an arc-shaped surface on one side near the inner cylinder body 13, and is nested in the lower trunnion clamp slot 149, which is in close contact with the inner cylinder body 13 and connected by welding. The lower fixing base 171 is provided with a circular groove on the step surface for fixing the lower trunnion disc 172. The bottom of the lower fixing base 171 is also provided with a lower shock absorber bolt fixing hole 175, which is similar to the bolt hole of the upper fixing base 161 and will not be described in detail here again.

The lower trunnion disc 172 is nested in the lower fixing base 171 and is fixedly connected with the lower fixing base 171 by bolts. The lower support trunnion 173 is a metal cylinder which is fixed on the horizontal support bracket when the transport container is stored horizontally.

The operation method of the transportation container for a nuclear power station spent fuel storage tank of the present invention is described in detail as following in view of Fig. 1 and Fig. 2.

The process operation method of horizontal concrete module
1) checking the sealing integrity of the penetrating cover plate 19 and the top cover 11, and replacing the O-shaped seal ring 115 if the sealing integrity is not satisfied;
2) lifting and installing the lower buffer plate 2 in the transportation container;
3) lifting the transportation container horizontally onto the transport trailer;
4) aligning the transportation container with the horizontal concrete module;
5) removing the top cover 11 of the transportation container;
6) opening the penetrating cover plate 19 at the bottom of the transportation container;
7) using a hydraulic cylinder to extend through the through hole 152 at the bottom of the transportation container, to pull the spent fuel storage tank from the horizontal concrete module into the transport container;
8) lifting and installing the upper buffer plate 2 horizontally;
9) fixing the penetrating cover plate 19 of the transportation container and the top cover 11;
10) transporting the transportation container to the external transport facility building;
11) opening the vent hole 112 at the top of the transportation container for vacuum drying;
12) performing helium filling operation via the vent hole 112;
13) closing the vent hole 112 and using the seal leak inspection hole 113 to detect the sealing performance of the helium gas leak hole;
14) meeting the seal safety requirements if no leak is detected;
15) lifting the transportation container to the off-site special vehicles or ships for transportation;
16) installing and fixing the shock absorber via using bolts extending through the shock absorber to the upper support ring bolt hole 144 and the lower support ring bolt hole 146 of the outer cylinder body 14.

The process operation method of vertical concrete module:
1) checking the sealing integrity of the penetrating cover plate 19 and the top cover 11, and replacing the O-shaped seal ring 115 if the sealing integrity is not satisfied;
2) opening the top cover of the vertical concrete silo and lifting the upper buffer plate 2 to the top of the spent fuel storage tank;
3) installing an adapter on the top of the vertical concrete silo;
4) lifting the transport container vertically to the top adapter of the vertical concrete silo;
5) lifting the spent fuel storage tank and the upper buffer pad 2 vertically to the inside of the container body 1 through a sling;
6) pulling out the adapter tray and lifting the top cover 11 of the transportation container onto the tray first;
7) lifting the lower buffer plate 2 onto the top cover 11;
8) pushing the adapter tray in so that the lower buffer plate 2 and the top cover 11 reset to the bottom of the transportation container at the same time;
9) installing the top cover 11 of the transportation container;
10) transporting the transportation container to the transport facility building;
11) repeating the steps 11 to 16 of the process operation method of horizontal concrete module.

Compared with the prior art, the present invention provides a transportation container for a nuclear power station spent fuel storage tank which is suitable for both horizontal and vertical spent fuel storage tanks for the first time. For the existing vertical and horizontal dry spent fuel storage facilities, spent fuel storage tanks may be stored directly in transportation containers for long-distance transportation after a number of years of intermediate storage, transportation to reprocessing plants or geological disposal facilities for reutilization and reprocessing of the spent fuel assemblies can effectively solve the technical problems of direct long-distance transportation of spent fuel metal storage tanks at home and abroad.

The above described embodiments are only preferred embodiments of the present invention, and are not intended to limit the scope of the present invention. Any modification, equivalent replacement and improvement within the spirit and principle of the present invention should be included in the protection scope of the present invention.

## Claims

1. A transportation container for a nuclear power station spent fuel storage tank, **characterized in that** the transportation container for a nuclear power station spent fuel storage tank comprises:
a container body (1) comprising an inner cylinder body (13) and an outer cylinder body (14) sheathed outside the inner cylinder body (13), the inner cylinder body (13) being provided with a guide rail (18);
a top cover (11), mounted at a top of the container body (1) by an upper flange (12); and
a penetrating cover plate (19), detachably mounted at a bottom of the container body (1) by a lower flange (15);
wherein an upper buffer plate (2) is arranged between the top cover (11) and a spent fuel storage tank in the inner cylinder body (1), and a lower buffer plate (2) is arranged between the penetrating cover plate (19) and the spent fuel storage tank in the inner cylinder body (13).

2. The transportation container for a nuclear power station spent fuel storage tank according to claim 1, **characterized in that** the upper flange (12) is provided with a single step surface (122), a guide surface (123) and a lead-filled interlayer (125), the top cover (11) is located on the single step surface (122), and the top cover (11) is assembled to the upper flange (12) through bolts set in bolt holes in the top cover (11) and bolt holes in the upper flange (12).

3. The transportation container for a nuclear power station spent fuel storage tank according to claim 1, **characterized in that** the top cover (11) is provided with a seal leak inspection hole (113) and two seal grooves (114) each being formed with an O-shaped seal ring (115), the seal leak inspection hole (113) is provided with a quick joint round groove (1131), a quick joint vertical channel (1132), a horizontal channel (1133) and a seal surface vertical channel (1134), and the seal surface vertical channel (1134) is positioned between the two O-shaped seal rings (115).

4. The transportation container for a nuclear power station spent fuel storage tank according to claim 1, **characterized in that** the guide rail (18) arranged on the inner cylinder body (13) comprises a support guide rail (181) and a thermal conduction guide rail (182) arranged at intervals.

5. The transportation container for a nuclear power station spent fuel storage tank according to claim 1, **characterized in that** the inner cylinder body (13) comprises an outer layer of cylinder body (131), an inner layer of cylinder body (132), and a middle lead layer (133) filled between the outer layer of cylinder body (131) and the inner layer of cylinder body (132).

6. The transportation container for a nuclear power station spent fuel storage tank according to claim 1, **characterized in that**, the outer cylinder body (14) comprises an outer housing (141), an upper and a lower ring plate (142), an upper shock absorber support ring (143), an upper support ring bolt hole (144), a lower shock absorber support ring (145), a lower support ring bolt hole (146) and a neutron shielding layer (147), the upper shock absorber support ring (143), the lower shock absorber support ring (145) and the neutron shielding layer (147) are contained by the outer housing (141) and the upper and the lower ring plate (142), the neutron shielding layer (147) is seated between the upper shock absorber support ring (143) and the lower shock absorber support ring (145).

7. The transportation container for a nuclear power station spent fuel storage tank according to claim 1, **characterized in that** the lower flange (15) comprises a base (151), a through hole (152) in a center of the base (151), a lead filling groove (153) and a drain hole (154), an external through hole (1521), an internal through hole (1522), a step surface (1523) and a plurality of bolt holes (1524) are set around the through hole (152), the penetrating cover plate (19) is seated on the step surface (1523), bolts extend through the penetrating cover plate (19) and the bolt holes (1524) to secure the penetrating cover plate (19) to the lower flange (15) via redundant fastening seal.

8. The transportation container for a nuclear power station spent fuel storage tank according to claim 7, **characterized in that** the penetrating cover plate (19) is provided with a plurality of bolt grooves at a periphery thereof and two sealing grooves at a back side thereof, and each sealing groove is provided with an O-shaped seal ring (115) therein.

9. The transportation container for a nuclear power station spent fuel storage tank according to claim 1, **characterized in that** the buffer plate (2) comprises an upper panel (21), a lower panel (22), an external support ring (23), an internal support ring (24) and a buffer sleeve (25), the upper panel (21), the lower panel (22), the external support ring (23) and the internal support ring (24) are welded into an integrated cylindrical ring, and the buffer sleeve (25) is a semicircle circular pipe with a semicircle cross section, which is distributed uniformly in the cylindrical ring in a radiating concentric ring, the arc top and bottom of the buffer sleeve (25) are in contact with the upper panel (21) and the lower panel (22) respectively.

10. The transportation container for a nuclear power station spent fuel storage tank according to claim 1, **characterized in that** the transportation container for a nuclear power station spent fuel storage tank further comprises an upper trunnion (16), the upper trunnion (16) comprises an upper fixing base (161), an upper trunnion disc (162), an upper support trunnion (163), a hoisting trunnion (164), an upper protective baffle (165) and an upper shock absorber fixing bolt hole (166), the upper fixing base (161) is in close contact with the inner cylinder body (13), and the upper trunnion disc (162) is nested in the upper fixing base (161) and is fixedly connected with the upper fixing base (161) via bolts.

11. The transportation container for a nuclear power station spent fuel storage tank according to claim 1, **characterized in that**, the transportation container for a nuclear power station spent fuel storage tank further comprises a lower trunnion (17), the lower trunnion (17) comprises a lower fixing base (171), a lower trunnion disc (172), a lower support trunnion (173), a lower protective baffle (174) and a lower shock absorber bolt fixing hole (175), the lower fixing base (171) is in close contact with the inner cylinder body (13), and the lower trunnion disc (172) is nested in the lower fixing base (171) and is fixedly connected with the lower fixing base (171) via bolts..
